# EUROPÄISCHE PATENTSCHRIFT

(11) **EP 3 180 218 B1**
(45) Veröffentlichungstag und Bekanntmachung des Hinweises auf die Patenterteilung: **30.09.2020**
(21) Anmeldenummer: 15747411.5
(22) Anmeldetag: 28.07.2015
(51) Int. Cl.: B60T 13/66, B60T 17/02, F04B 17/03, G01P 3/481

(54) **VERFAHREN ZUR BESTIMMUNG EINER POSITION UND/ODER LAGEVERÄNDERUNG EINER HYDRAULIKPUMPE EINES KRAFTFAHRZEUGBREMSSYSTEMS SOWIE KRAFTFAHRZEUGBREMSSYSTEM**
METHOD TO DETERMINE THE POSITION AND/OR MOVEMENT OF THE HYDRAULIC PUMP OF A VEHICLE BRAKE SYSTEM, AND BRAKE SYSTEM
PROCÉDÉ POUR DÉTERMINER LA POSITION ET/OU LE MOUVEMENT DE LA POMPE HYDRAULIQUE D'UN SYSTÈME DE FREINS DE VÉHICULE, ET SYSTÈME DE FREINS DE VÉHICULE

(30) Priorität: 14.08.2014 DE 102014216230
(43) Veröffentlichungstag der Anmeldung: 21.06.2017
(73) Patentinhaber: Continental Teves AG & Co. OHG, 60488 Frankfurt am Main (DE)
(72) Erfinder: KUTZNER, Michael, 65843 Sulzbach (DE); HEINZ, Micha, 64289 Darmstadt (DE); TRUOEL, Jan, 64347 Griesheim (DE)
(86) Internationale Anmeldenummer: PCT/EP2015/067243
(87) Internationale Veröffentlichungsnummer: WO 2016/023746

(56) Entgegenhaltungen:
- EP-A1- 1 445 161
- WO-A1-02/060734

## Beschreibung

Die vorliegende Erfindung betrifft ein Verfahren gemäß Oberbegriff von Anspruch 1 sowie ein Kraftfahrzeugbremssystem gemäß Oberbegriff von Anspruch 8.

Elektrohydraulische Bremssysteme weisen zur Realisierung von Funktionen, wie beispielsweise eines Antiblockiersystems oder einer Fahrdynamikregelung, ein Pumpenaggregat auf, welches mittels Elektromotor angetrieben wird. Zur Unterdrückung unerwünschter Geräusche im Fahrzeug bzw. Realisierung situationsabhängiger Arbeitsbereiche bzw. Regelfunktionen des Bremssystems, z. B. im Notfall oder in einem auf Komfort ausgerichteten Betrieb, ist eine möglichst genaue Kenntnis der Position und/oder der Drehzahl der Hydraulikpumpe bzw. der Rotors des zum Antrieb der Pumpe vorgesehenen elektrischen Maschine notwendig.

Diesbezüglich wird in der WO 02/060734 A1 ein Aggregat zur Erfassung der Drehzahl des Elektromotors für eine elektronisch geregelte Bremsanlage beschrieben, welche wenigstens einen Sensor zur Bestimmung der Drehzahl des Elektromotors bzw. der Welle aufweist. Weiterhin muss ein solcher Elektromotor in seiner Funktionalität so ausgelegt sein, dass dieser die an das Bremssystem gestellten Anforderung für ein gegebenes elektrisches Bordnetz eines Fahrzeugs erfüllen kann.

Zur Bestimmung der Position der Hydraulikpumpe bzw. des Rotors der zum Antrieb der Pumpe vorgesehenen elektrischen Maschine werden insbesondere induktive Sensoren verwendet, welche infolge des zugrundeliegenden physikalischen Messprinzips mittels Schwingkreis bestimmte Frequenzen für den Betrieb benötigen. Daraus ergeben sich Einschränkungen beim Systemtakt der ansteuernden und auswertenden Mikrocontrollereinheit (MCU) bzw. Leistungssteuereinheit (PCU), woraus Laufzeitprobleme im Betrieb resultieren können.

Die Aufgabe der Erfindung besteht somit darin, ein Mittel bereitzustellen, welches eine Bestimmung der Position der Hydraulikpumpe bzw. der zum Betreiben der Hydraulikpumpe vorgesehenen elektrischen Maschine ohne Einschränkungen des Systemtakts der ansteuernden und auswertenden Mikrocontrollereinheit (MCU) und/oder Leistungssteuereinheit (PCU) realisiert.

Diese Aufgabe wird durch das Verfahren gemäß Anspruch 1 sowie das Kraftfahrzeugbremssystem entsprechend Anspruch 8 gelöst.

Die Erfindung beschreibt ein Verfahren zum Betreiben einer Hydraulikpumpe eines Kraftfahrzeugbremssystems, wobei die Hydraulikpumpe mittels einer pulsmoduliert angesteuerten elektrischen Maschine betrieben wird und eine Erfassung eines Strommesssignals und/oder ) eines Spannungsmesssignals der elektrischen Maschine und/oder eines Laststromkreises zur Versorgung der elektrischen Maschine erfolgt, wobei auf Grundlage des Strommesssignals und/oder des Spannungsmesssignals sowie zumindest einer Frequenz des

Strommesssignals und/oder des Spannungsmesssignals, welche in einem im Wesentlichen ganzzahligen Teilerverhältnis zu einer Kommutatorfrequenz der elektrischen Maschine steht, die Position und/oder Lageveränderung der Hydraulikpumpe bestimmt und zur Ansteuerung der elektrischen Maschine herangezogen wird.

Die Kommutatorfrequenz bezeichnet bei einem mechanischen Kommutator dabei insbesondere diejenige Frequenz, mit welcher eine Bürste des Schleifkontakts von einer Kommutatorlamelle zu einer nächsten Kommutatorlamelle wechselt. Im Falle einer elektronischen Kommutierung einer bürstenlosen Maschine wird unter Kommutatorfrequenz bevorzugt die Ansteuerfrequenz eines die elektrische Maschine betreibenden Wechselrichters verstanden.

In vorteilhafter Weise wird somit eine Bestimmung der Position und/oder Lageveränderung der Hydraulikpumpe bzw. der zum Betreiben der Hydraulikpumpe vorgesehenen elektrischen Maschine ohne Einschränkungen des Systemtakts der ansteuernden und auswertenden Mikrocontrollereinheit (MCU) und/oder Leistungssteuereinheit (PCU) realisiert. Unter Lageveränderung wird im Rahmen der Erfindung insbesondere eine Erfassung von Winkeländerungen und/oder einer Drehzahl und/oder weiterer von diesen abgeleiteter Größen verstanden. Laufzeitprobleme, welche sich in Folge der bisherigen Einschränkungen beim Systemtakt aufgrund definierter Frequenzen des jeweiligen Sensors ergaben, treten vorteilhafterweise nicht auf. Weiterhin kann der Positionssensor entfallen, wodurch Kosten, Platzbedarf und Gewicht eingespart werden können. Zudem können bei der Mikrocontrollereinheit (MCU) bzw. Leistungssteuereinheit (PCU) Ressourcen eingespart oder freigestellt, welche für andere Aufgaben vorgesehen werden können. Dies sind zum Beispiel die Nutzung frei gewordener Pins des entsprechenden Mikrocontrollers und/oder umfangreiche Rechenschritte, welche durch die Datenerfassung, Kommunikation und Berechnung der Sensorsignale hervorgerufen würden. Alternativ kann ein Positionssensor vorgesehen sein, welcher bevorzugt zur redundanten Positionserfassung vorgesehen ist. Zwar bestehen dadurch die oben genannten Vorteile nicht mehr, jedoch wird durch die Redundanz eine Erhöhung der Ausfallsicherheit und somit des erreichbaren Sicherheitslevels, bsp. gemäß ISO 26262, erzielt.

Aus dem Strommesssignal und/oder dem Spannungsmesssignal wird bevorzugt zumindest eine im Wesentlichen ganzzahlige Subharmonische der Kommutatorfrequenz der elektrischen Maschine gefiltert und deren Amplitude wird mit zumindest einem vorgegebenen Grenzwert verglichen. Vorteilhafterweise wird dadurch eine Erkennung insbesondere von Abnutzungserscheinungen und/oder Verschmutzungen der Bürsten der elektrischen Maschine erzielt.

Zweckmäßigerweise erfolgt für das Strommesssignal und/oder das Spannungsmesssignal eine Offsetkorrektur auf einen Wert ungleich null. Ein Vorteil davon ist, dass ein Entstehen unerkannter negativer Ströme, insbesondere im Generatorbetrieb der Maschine, erkannt und für die Stromregelung herangezogen werden kann.

Gemäß einer bevorzugten Ausführungsform erfolgt eine Verstärkung eines Gleichanteils und eine separate Verstärkung eines Wechselanteils des Spannungssignals und/oder des Stromsignals, wobei zumindest ein Verstärkungsfaktor in der Weise gesteuert und/oder geregelt wird, dass störungsbedingte Rückwirkungen auf das Spannungssignal und/oder das Stromsignal im Wesentlichen vermieden werden. Eine Filterung von Störgrößen aus dem Kraftfahrzeugbordnetz erfolgt somit in vorteilhafter Weise bereits während der Messdatenerfassung. Durch diese Maßnahme kann die Qualität der Vorverarbeitung gesteigert werden.

Das Strommesssignal und/oder das Spannungsmesssignal werden entsprechend einer vorteilhaften Ausführungsform mit berechneten Größen eines Beobachtermodells der elektrischen Maschine verglichen, wobei das Beobachtermodell Abbildungen des konstruktiven Aufbaus und nicht-reversibler Zustandsgrößen und reversibler Zustandsgrößen der elektrischen Maschine umfasst.

Die nicht-reversiblen Zustandsgrößen werden zumindest während des Funktionszeitraumes der elektrischen Maschine bevorzugt wiederholt adaptiert. Beispielsweise können somit inkorrekte Fehlererkennungen in Folge von Verschleiß vermieden werden.

Bevorzugt werden das Strommesssignal und/oder das Spannungsmesssignal und/oder die nicht-reversiblen Zustandsgrößen und/oder die reversiblen Zustandsgrößen mit vorgegebenen Grenzwerten verglichen, wobei aus einem Erreichen oder Überschreiten eines jeweiligen Grenzwertes und/oder einer jeweiligen vorgegebenen Kombination von Grenzwerten ein spezifischer Fehler abgeleitet wird. Ein Vorteil ist, dass somit die Erkennungsrate von Fehlern verbessert und/oder das Eintreten dadurch bedingter negativer Folgen reduziert werden kann. Die Einstufung in ein höheres Sicherheitslevel, z.B. gemäß ISO 26262, ist dadurch möglich.

Die Erfindung beschreibt weiterhin ein Kraftfahrzeugbremssystem mit einer Hydraulikpumpe, welches ausgestaltet ist zumindest eine dem Kraftfahrzeugbremssystem zugeordnete elektrische Maschine pulsmoduliert zu betreiben und Mittel zur Erfassung eines Strommesssignals und/oder eines Spannungsmesssignals der elektrischen Maschine und/oder eines Laststromkreises zur Versorgung der elektrischen Maschine umfasst, wobei das Kraftfahrzeugbremssystem derart ausgestaltet ist, dass auf Grundlage des Strommesssignals und/oder des Spannungsmesssignals sowie zumindest einer Frequenz des Strommesssignals und/oder des Spannungsmesssignals, welche in einem im Wesentlichen ganzzahligen Teilerverhältnis zu einer Kommutatorfrequenz der elektrischen steht, die Position und/oder Lageveränderung der Hydraulikpumpe bestimmt und zur Ansteuerung der elektrischen Maschine herangezogen wird.

Das Kraftfahrzeugbremssystem umfasst besonders bevorzugt ein Steuergerät, welches zum Betrieb der elektrischen Maschine einer Hydraulikpumpe des Kraftfahrzeugbremssystems und/oder zum Betrieb der elektrischen Maschine einer elektrischen Feststellbremse ausgestaltet ist. In vorteilhafter Weise werden die elektrische Maschine der Hydraulikpumpe und der oder die elektrischen Maschinen der elektrischen Feststellbremse somit mittels des einen Steuergeräts betrieben. Auch kann die Positionsbestimmung und/oder Erkennung der Lageveränderung der Hydraulikpumpe sowie der Feststellbremse präziser realisiert werden, als es unter Verwendung eines dafür vorgesehenen Sensors der Fall ist, womit auch anzuwendende Drehmomente in genauerer Weise dosiert werden können.

Zum Betrieb der elektrischen Maschine der Hydraulikpumpe und zum Betrieb der elektrischen Maschine der elektrischen Feststellbremse sind gemeinsam genutzten Hardware- und/oder Software-Ressourcen eines integrierten Schaltkreis (ASIC) des Steuergeräts vorgesehen. Hierdurch ergibt sich in vorteilhafter Weise, dass funktionelle Baugruppen und/oder Softwaremodule, welche zur Ansteuerung und/oder Auswertung einer elektrischen Maschine Verwendung finden, ebenfalls für wenigstens eine weitere elektrische Maschine genutzt werden können. Dadurch ergeben sich Vorteile insbesondere bei Kosten und Platzbedarf.

Das Steuergerät umfasst bevorzugt zumindest eine Mikrocontrollereinheit und eine Leistungssteuereinheit, wobei die gemeinsam genutzten Hardware- und/oder Software-Ressourcen durch diese Mikrocontrollereinheit und/oder diese Leistungssteuereinheit umfasst sind.

Bevorzugt umfasst die Leistungssteuereinheit, welche insbesondere als Gemischtsignalschaltkreis ausgestaltet ist, zumindest ein Ansteuermodul zur pulsweitenmodulierten Ansteuerung einer Schalteinrichtung zum Betreiben der zumindest einen elektrischen Maschine und wenigstens eine Spannungserfassungseinrichtung zur Erfassung des wenigstens einen Spannungsmesssignals und/oder zumindest eine Stromerfassungseinrichtung zur Erfassung des wenigstens einen Strommesssignals.

Vorzugsweise stellt die Leistungssteuereinheit der Mikrocontrollereinheit mittels wenigstens einer Kommunikationsschnittstelle das, insbesondere vorverarbeitete, Spannungsmesssignal und/oder Strommesssignal und/oder davon abgeleitete Informationen bereit. Die Mikrocontrollereinheit erhält somit in vorteilhafter Weise bereits vorverarbeitete Daten von der Leistungssteuereinheit und ist daher im Wesentlichen von Signalverarbeitungsaufgaben entlastet. Die Leistungssteuereinheit kann zudem auf die Vorverarbeitung hin optimiert und der Datentransfer über die Kommunikationsschnittstelle verringert werden.

Bevorzugt sind jeweilige motorspezifische Parameter in zumindest einem durch das Steuergerät umfassten Speicher abgelegt. Durch Parametrierung mittels Software ist eine Verwendung einer vorliegenden Hardware vorteilhaft nicht nur auf eine bestimmte Konfiguration mit entsprechenden elektrischen Maschinen ausgelegt, sondern kann in einfacher Weise auf unterschiedliche Systemkonfigurationen portiert werden.

Das erfindungsgemäße Kraftfahrzeugbremssystem ist bevorzugt zur Ausführung des erfindungsgemäßen Verfahrens ausgestaltet.

Weitere bevorzugte Ausführungsformen ergeben sich aus der nachfolgenden Beschreibung von Ausführungsbeispielen an Hand von Figuren.

Es zeigen:
Fig. 1 ein Blockschaltbild eines Ausführungsbeispiels der erfindungsgemäßen Schaltungsanordnung für ein elektrohydraulisches Kraftfahrzeugbremssystem,
Fig. 2 ein Ausführungsbeispiel der Spannungs- 8 und Stromerfassungseinrichtung 9 zur Vorverarbeitung der gemessenen Spannungs- und Stromwerte mittels analoger Filterung,
Fig. 3 ein Ausführungsbeispiel der erfindungsgemäßen Vorverarbeitung mit digitalen Signalverarbeitung,
Fig. 4 ein weiteres Ausführungsbeispiel zur Messwerterfassung, wobei eine Filterung von Störgrößen aus dem Kraftfahrzeugbordnetz bereits während dieser Messdatenerfassung erfolgt.

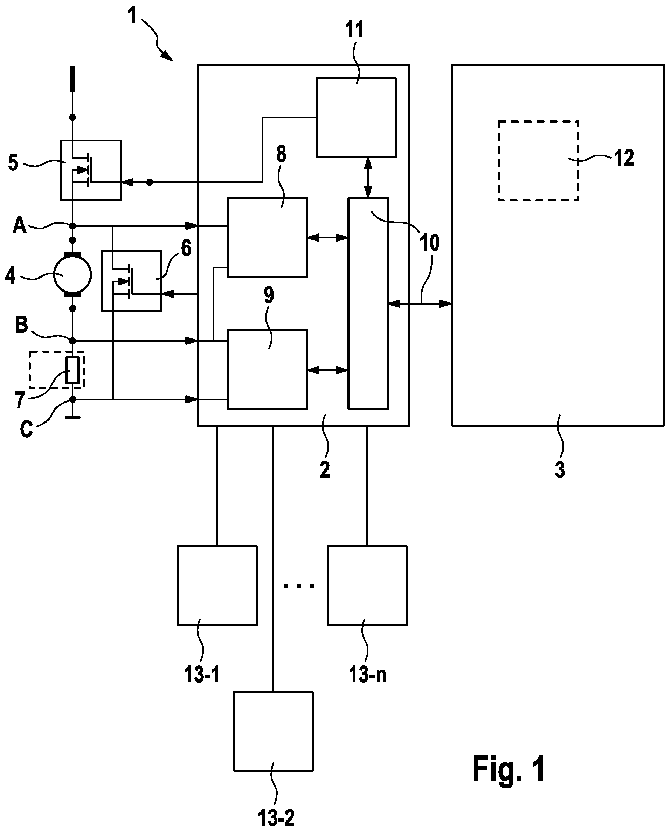

Fig. 1 zeigt das erfindungsgemäße Kraftfahrzeugbremssystem am Beispiel eines elektrohydraulischen Kraftfahrzeugbremssystems. Auf die Darstellung weiterer, an sich bekannter Komponenten eines Bremssystems, wie beispielsweise der Radbremsen, wurde verzichtet; diese sind im Rahmen der Erfindung jedoch ebenfalls berücksichtigt. Leistungssteuereinheit (PCU) 2 steuert mittels Ansteuermodul 11 Treiber 5, welcher den Leistungspfad der Energieversorgung von Elektromotor 4 einer Hydraulikpumpe eines elektrohydraulischen Bremsensteuergerätes schaltet. Der ebenfalls durch PCU 2 angesteuerte Rezirkulationstreiber 6 dient als Leistungstreiber des Rezirkulationspfades einer pulsweitenmodulierten Ansteuerung, wie es beispielsweise in der DE 10 2008 055 696 A1 für eine Ventilansteuerung beschrieben ist. Die an den Knotenpunkten A und B gemessenen Spannungswerte werden von Spannungserfassungseinrichtung 8 zur Bestimmung der IST-Spannung der Ansteuerung von Elektromotor 4 herangezogen. Mittels der Spannungswerte an den Knotenpunkten B und C, welche die Spannungsdifferenz über Widerstand 7 wiedergeben, erfolgt durch Stromerfassungseinrichtung 9 die Bestimmung des IST-Stroms von Elektromotor 4. Die IST-Spannung kann unter Entfallen von Widerstand 7 bevorzugt auch über Treiber 5 oder Rezirkulationstreiber 6 erfasst werden. Die Spannungs- und Stromerfassungseinrichtungen 8,9 umfassen dabei weitere Schaltungsteile, beispielsweise zur Filterung bzw. Vorverarbeitung. Ein Sensor zur Erfassung der Rotorlage zum Betrieb von Elektromotor 4 ist nicht notwendig, kann jedoch dennoch vorgesehen sein, insbesondere um Redundanz-Sicherheitsanforderungen (z.B. gemäß ISO 26262) zu erfüllen. Die Ansteuerung und Lageerfassung eines Elektromotors eines Aktuators der elektrischen Feststellbremse 13-1 wird mittels Schaltungsanordnung 1 in vergleichbarer Weise aus den IST-Stromwerten und IST-Spannungswerten realisiert, welche ebenfalls mit den Spannungs- und Stromerfassungseinrichtungen 8,9 ermittelt werden. Auch Ansteuermodul 11 weist gemäß dem Ausführungsbeispiel gemeinsam genutzte Ressourcen auf. Weitere elektrische Feststellbremsen bzw. funktionelle Einheiten, welche Elektromotoren umfassen, können ebenfalls damit angesteuert und ausgewertet werden. Diese sind in Fig. 1 durch die Funktionseinheiten 13-2 bis 13-n repräsentiert. Sensoren zur Lageerfassung dieser Elektromotoren sind dabei ebenfalls nicht notwendigerweise erforderlich, können jedoch jeweils ebenfalls vorgesehen sein.

Die Ergebnisse der IST-Strom- und IST-Spannungserfassung von Elektromotor 4 sowie der weiteren Elektromotoren 13-1 bis 13-n werden über Kommunikationsschnittstelle 10 der Mikrocontrollereinheit 3 bereitgestellt. MCU 3 umfasst dabei Funktionsblock 12, welcher repräsentativ für insbesondere softwarebasierte Rechenvorschriften zur Ansteuerung der Elektromotoren 4, 13-1 etc. steht, wobei PCU 2 der MCU 3 bereits vorverarbeitete Daten bereitstellen kann. Somit benötigt MCU 3 keine Ressourcen für die Realisierung der Signalverarbeitung sondern berechnet auf Basis der erhaltenen IST-Werte die SOLL-Werte für die Ansteuerung des jeweiligen Elektromotors. Zudem wird dadurch der Datentransfer über Kommunikationsschnittstelle 10 verringert, wodurch weitere Ressourcen eingespart werden.

MCU 3 und PCU 2 können unter Berücksichtigung von Maßnahmen der Ausfallsicherheit bzw. Steigerung der Verfügbarkeit im Wesentlichen auf einem gemeinsamen Gemischtsignalschaltkreis (Mixed-Signal-IC) bzw. ASIC integriert sein, womit die Auswertung und Ansteuerung der Elektromotoren im Bremsensteuergerät gebündelt werden kann. Hierdurch ergibt sich, dass Schaltungsteile, welche für die Ansteuerung und Auswertung von Elektromotor 4 der Hydraulikpumpe eines Bremssystems vorgesehen sind, auch für die Ansteuerung und Auswertung weiterer Aktoren genutzt werden können. Weiterhin kann die Integration dieser Funktionen auf das Überwachungskonzept übertragen werden, sodass ein höherer gemeinsamer Sicherheitslevel umgesetzt werden kann. MCU 3 sowie PCU 2 sind auf den jeweiligen Einsatzbereich in der Weise optimiert, dass eine Parametrierung auf unterschiedliche Elektromotoren bzw. komplette Funktionseinheiten, wie beispielsweise Bremsaktuatoren, in einfacher Weise möglich ist. Spezifische Parameter können hierfür insbesondere in einem nichtflüchtigen Speicher, z.B. einem EEPROM, der elektronischen Kontrolleinheit des Kraftfahrzeugbremssystems abgelegt sein und geladen werden.

Die sensorlose Motorpositionserfassung (SLP) bzw. sensorlose Motordrehzahlerfassung (SLN) erfolgt gemäß den Ausführungsbeispielen mittels Auswertung der Strom- und/oder Spannungsrippel der entsprechend erfassten IST-Werte und einer Modellbildung des Elektromotors. Um eine kurze und einfache Beschreibung der Ausführungsbeispiele zu ermöglichen, werden die Begriffe Position und Drehzahl im Folgenden im Wesentlichen redundant verwendet. Die Rippel (vergleichsweise kleine Schwankungen der Werte) entstehen als ein Resultat der Rotation des Rotors und werden zur Bestimmung der Position desselben bzw. der Hydraulikpumpe vorverarbeitet und ausgewertet. Bei der Bewertung dieser periodisch auftretenden Strom- und/oder Spannungsrippel werden diesbezüglich Signale herangezogen, welche in einem ganzzahligen Teilerverhältnis zur Kommutatorfrequenz stehen. Dazu werden die ganzzahligen Subharmonischen der Kommutatorfrequenz herausgefiltert. Die Drehzahl der Maschine bzw. Hydraulikpumpe kann bei Kenntnis der Maschinenparameter, z.B. Geometrie, auf dieser Grundlage beispielsweise mittels Inkrementieren der solchermaßen gefilterten Rippel bestimmt werden. Die Position ergibt sich in vergleichbarer Weise unter Kenntnis einer Intitialposition.

Die sensorlose Motorpositionserfassung (SLP) bzw. sensorlose Motordrehzahlerfassung (SLN) erfolgt auf Basis des vorgenannten bevorzugt mittels drei Matrizen. Eine erste Matrix bildet den konstruktiven Aufbau des jeweils verwendeten Elektromotors 4 bis 13-n ab. Abnutzungswerte, welche nicht-reversible Änderungen, insbesondere durch Alterung von Motorbestandteilen, berücksichtigen, werden durch eine zweite Matrix beschrieben. Beispielsweise können der Bürstenwiderstand als Maß für die abnutzungsabhängige Bürstenlänge und der Temperaturänderungsgradient als Maß für die verschleißabhängige Kühlanbindung hierunter fallen. Diese zweite Matrix wird über den Funktionszeitraum des Motors regelmäßig adaptiert. Mittels einer dritten Matrix werden reversible Zustandsgrößen, wie z.B. reversible Zustandsänderungen physikalischer Größen in Folge thermischer Prozesse, während des Betriebs des Elektromotors beschrieben (Temperaturmodell). Auch wenn sich beispielsgemäß auf einen oder mehrere Elektromotoren mit Kommutatoren bezogen wird, so ist eine Anwendung mit elektronisch kommutierten Elektromotoren ebenfalls im Rahmen der Erfindung vorgesehen.

Für die Realisierung von Fehlerdiagnosen des jeweiligen Elektromotors werden die Werte bzw. Elemente der zweiten und/oder dritten Matrix (reversible und irreversible Änderungen) mit vorgegebenen und für den jeweiligen Motor und dessen anwendungsspezifischen, maximal zulässigen Matrizen und/oder Werten verglichen. Einem Erreichen eines bestimmten Wertes oder einer bestimmten Wertekombinationen kann dabei einem spezifischen Fehler zugeordnet werden. Dies kann, insbesondere in Abhängigkeit der Beschaffenheit des jeweiligen Werts oder der jeweiligen Werte, absolut oder differentiell erfolgen. Die fehlerspezifischen Werte werden dabei beispielsweise vor einer Inbetriebnahme eines jeweiligen Motors bestimmt und in einem Speicher abgelegt, aus dem sie im laufenden Betrieb gelesen werden können.

Ein plötzlicher Ausfall eines solchen Elektromotors könnte die Sicherheit von Verkehrsteilnehmer gefährden. Wird daher mittels eines Grenzwerts z.B. eine Erkennung bzw. vorzeitige Erkennung einer Abnutzung der Bürsten des Elektromotors realisiert, erfolgt im Falle des Erreichens (ggf. auch vorher) oder des vorzeitiges Erreichens des Grenzwerts, bezogen auf einen Bestimmungszeitraum, eine Fehleranzeige. Verschmutzungen von Bürsten bzw. des Kommutators können aus stark differierenden Bürstenwiderständen, in Verbindung mit in bestimmten Perioden auftretenden Strom- und/oder Spannungsrippeln, abgeleitet werden. Die Amplitude der in einem ganzzahligen Teilerverhältnis zur Kommutatorfrequenz stehenden gefilterten Frequenzen werden zur Erkennung dieser differierenden Bürstenwiderstände mit zumindest einem entsprechenden Grenzwert verglichen. Wird davon ausgegangen, dass lediglich einzelne Segmente eines Kommutators verschmutzt sind, werden bevorzugt lediglich die Subharmonischen herangezogen, die etwa der Kommutatorfrequenz geteilt durch die Kommutatorsegmentzahl entsprechen.

Ein Weiteres Beispiel einer Fehlerdiagnose ist das Erkennen einer Veränderung der magnetischen Remanenz gegebenenfalls vorhandener Dauermagnete des Motors. Durch fehlerinduzierte Strom- bzw. Spannungsimpulse kann dieser Restmagnetismus und/oder die Kennlinie der Dauermagneten verändert werden. Bei der Auswertung von Ist-Werten des Motorstroms und/oder der Motorspannung werden diese Veränderungen beispielsgemäß mittels Vergleich der Ist-Werte mit Ausgangswerten des Motormodells ermittelt und einem spezifischer Fehler zugeordnet. In vergleichbarer Weise kann das Motormodell herangezogen werden, um eine mögliche Überlastung vorzeitig zu erkennen, beispielsweise indem Ist-Ströme und/oder berechnete Ist-Widerstände der Motorwindungen ausgewertet und mit den Werten des Motormodells verglichen werden. In Abhängigkeit des oder der solchermaßen erkannten Fehler werden entsprechende Maßnahmen eingeleitet.

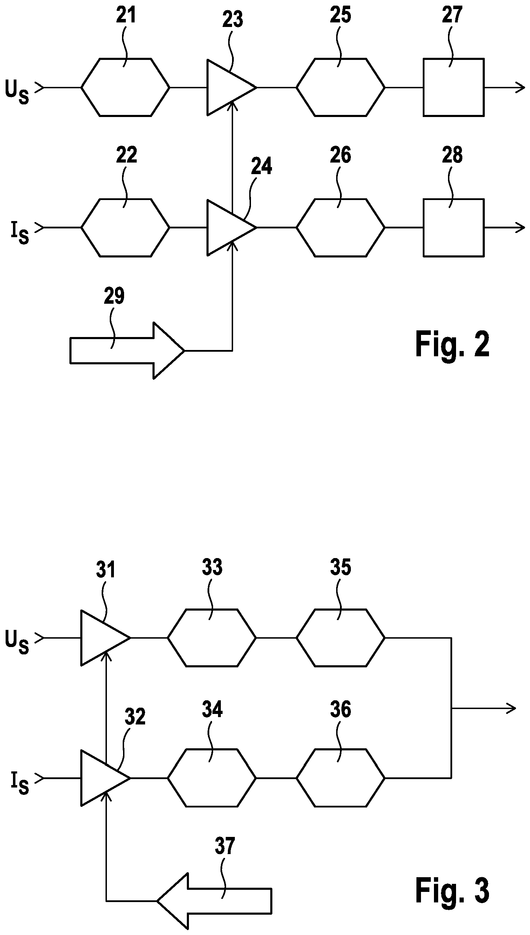

Die Fig. 2 zeigt ein Ausführungsbeispiel der Spannungs- 8 und Stromerfassungseinrichtung 9 zur Vorverarbeitung der gemessenen Spannungs- und Stromwerte mittels analoger Filterung. Die Ansteuerung von Treiber 5 erfolgt pulsweiten-moduliert, wobei insbesondere bei Verwendung eines Gleichspannungswandlers sichergestellt werden muss, dass Motorstrom und -spannung phasenrichtig und mit ausreichender Qualität erfasst werden. Damit eine Abbildung in den Wertebereich der Analog-Digital-Umsetzer 7,8 erziel wird, werden das erfasste Stromsignal IS und das erfasste Spannungssignal US mittels Verstärkereinrichtung 23,24 verstärkt. Da die Signale IS und US unterschiedliche Wertebereiche aufweisen, werden bevorzugt unterschiedliche Verstärkungsfaktoren vorgegeben. Ausgangsseitig werden die gefilterten Signale an nachfolgende funktionelle Baugruppen zur weiteren Vorverarbeitung (nicht dargestellt) oder mittels Kommunikationsschnittstelle 10 an MCU 3 übertragen. Diese und die nachfolgend beschriebenen Verfahren zur Signalverarbeitung können alternativ auch im Wesentlichen softwarebasiert durch die MCU 3 realisiert sein.

Für die Auswertung nicht relevante Frequenzen, welche beispielsweise aus der PWM-getakteten Ansteuerung resultieren, werden mittels der Filter 21,22 und 25,26 gefiltert, wofür z.B. in einem Frequenzband von 2,5 kHz bis 20 kHz eine 60 dB Dämpfung vorgesehen werden kann. Um eine qualitativ ausreichende Filterung zu erreichen, weisen die PWM-Frequenz und die Nutzfrequenz zur Ansteuerung des Motors dabei bevorzugt einen signifikanten Frequenzabstand von etwa 1/2 bis 2/3 einer Dekade auf, wobei die Nutzfrequenz kleiner als die PWM-Frequenz ist. Weitere Störgrößen, welche auf die Messung Einfluss nehmen könnten, wie beispielsweise Bordnetzschwankungen, werden ebenfalls kompensiert und/oder gefiltert.

Die Signalverarbeitung des Spannungssignals US und des Stromsignals IS ist in der Weise realisiert, dass die Filter 21 und 22 zumindest über den Nutzfrequenzbereich des Motors bevorzugt eine Phasendifferenz von kleiner oder etwa gleich 5° aufweisen, um möglichst geringe Zeitversätze aufgrund der elektronischen Auswertung an sich gleichzeitig auftretender Messwerte zu erhalten. Dies gilt ebenso für die Filter 25 und 26. Die Phasendifferenzen können auch davon abweichen, falls Zeitversätze in Folge der Analog-Digital-Wandlung vorliegen. Höhere als die genannten Phasendifferenzen sind insbesondere zulässig, wenn eine reduzierte Güte des Verfahrens toleriert werden kann oder besonders ausgeprägte Kommutierungsrippel zur Verfügung stehen oder beispielsweise über das Bordnetz Störungen in das Messsystem eingebracht werden.

Während definierter Zeiten wird mittels Verstärker 23 und 24 eine Offsetkorrektur 29 auf einen Wert ungleich null, z.B. 10 bis 50 LSB, vorgenommen. Dies erfolgt bevorzugt, wenn durch weitere Funktionen des Bremssystems keine Anforderungen an den jeweiligen Motor gestellt werden. Dadurch kann ein Entstehen unerkannter negativer Ströme im Generatorbetrieb des Motors, insbesondere bei ausgeprägten Bordnetzschwankungen, erkannt und vermieden werden, indem diese beispielsweise gemessen und bei der Modellbildung berücksichtigt werden oder ein Vorhandensein der Ströme lediglich erkannt wird und die Ansteuerung entsprechend ausfallsicher ausgestaltet ist. Für den zweiten Fall würden dadurch verursachte Ergebnisfehler des Modells toleriert werden. Weiterhin kann dadurch die Funktionsfähigkeit der Offsetkorrekturschaltung festgestellt werden bzw. eine Fehlerdiagnose der Auswertungsschaltung erfolgen, indem negative Antriebsströme bei der Momentbildung berücksichtigt werden. Die Fehlerdiagnosefähigkeit sowie die Genauigkeit der Modellbildung kann somit verbessert werden.

Die Fig. 3 zeigt ein Ausführungsbeispiel der erfindungsgemäßen Messwertvorverarbeitung entsprechend Fig. 2, jedoch mit digitaler Signalverarbeitung, welche somit zur Integration in einen integrierten Schaltkreis besonders geeignet ist. Nach einer Pufferung (nicht dargestellt) und Verstärkung 31,32 (siehe Beschreibung zum Ausführungsbeispiel der Fig. 2) des Strom- und Spannungssignals US und IS erfolgt eine möglichst synchrone und hinreichend schnelle Analog-Digital-Wandlung mittels der Sigma-Delta-Wandler 33,34. Im Anschluss wird eine digitale Filterung 35,36 der digitalisierten Signale vorgenommen, wobei diese Filter mit kleineren Phasendifferenzen zueinander ausgelegt werden können, als es beispielsweise für diskrete Ausführungsformen der Fall ist. Ausgangsseitig werden die digitalisierten und gefilterten Signale an nachfolgende funktionelle Baugruppen zur weiteren Vorverarbeitung (nicht dargestellt) oder mittels Kommunikationsschnittstelle 10 an MCU 3 übertragen. Auch gemäß diesem Ausführungsbeispiel ist bevorzugt eine Offsetkorrektur 37 vorgesehen.

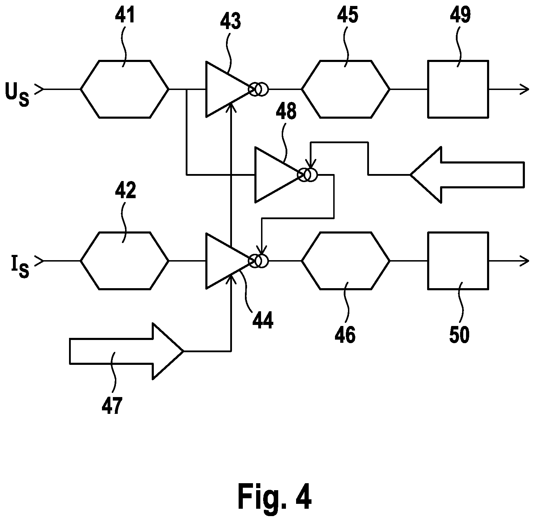

In Fig. 4 ist ein weiteres Ausführungsbeispiel der erfindungsgemäßen Messwertvorverarbeitung mittels Spannungs- 8 und/oder Stromerfassungseinheit 9 gezeigt, wobei eine Filterung von Störgrößen aus dem Kraftfahrzeugbordnetz bereits während der Messdatenerfassung erfolgt. Dadurch wird insbesondere eine Vereinfachung der Auslegung der Filter 45, 46 erreicht, da die Phasenabhängigkeit sowie Synchronität des Stromsignals IS und Spannungssignals US nicht notwendigerweise gegeben sein muss. Weiterhin kann die Abtastfrequenz für das Spannungssignal US bzw. das Stromsignal IS wesentlich verringert werden, wodurch geringere Rechenressourcen benötigt werden.

Die Filter 41 und 42, Offsetkorrektur 47 sowie Ana-log-Digital-Wandler 49,50 weisen im Wesentlichen gleiche Funktionen auf, wie sie für die Filter 21,22, Offsetkorrektur 29 und Analog-Digital-Wandler 27,28 des Ausführungsbeispiels der Fig. 2 beschrieben wurden. Die Abtastrate von Ana-log-Digital-Wandler 49 ist bevorzugt kleiner als die Nutzfrequenz zur Ansteuerung des jeweiligen Motors. Die Abtastrate von Analog-Digital-Wandler 50 ist bevorzugt größer als das zweifache der höchsten Nutzfrequenz zur Ansteuerung des jeweiligen Motors. Entsprechend des Ausführungsbeispiels der Fig. 4 erfolgt eine Verstärkung des Gleichspannungsanteils 43 und eine separate Verstärkung des Wechselspannungsanteils 48 des Spannungssignals US. Ein nachfolgender Rechenaufwand zur Filterung der Störung durch MCU 3 kann somit entfallen. Über den Wechselspannungsverstärker 48 wird die Verstärkung des Stromverstärkers 44, insbesondere unter Heranziehung von berechneten Werten des Motormodells, durch MCU 3 in der Weise gesteuert und/oder geregelt, dass störungsbedingte Rückwirkungen auf den Strom bzw. die Strommessung nivelliert und Fehler in Folge nicht ausreichender Filterung von Störungen vermieden werden. In gleicher Weise kann eine Steuerung und/oder Regelung der Verstärkung des Stromverstärkers 44 in Abhängigkeit der Temperatur vorgesehen sein, wobei als Grundlage insbesondere der mittels Motormodell berechnete Wicklungswiderstand der Motorwindungen herangezogen wird, dessen Wert durch MCU 2 bereitgestellt wird. Dieser Signalvorverarbeitungsprozess ermöglicht eine ressourcenschonendere Berechnung durch nachfolgende funktionelle Baugruppen, wie beispielsweise MCU 3, wodurch Kosten eingespart werden können.

## Patentansprüche

1. Verfahren zum Betreiben einer Hydraulikpumpe eines Kraftfahrzeugbremssystems, wobei die Hydraulikpumpe mittels einer pulsmoduliert angesteuerten elektrischen Maschine (4, 13-1, 13-2, 13-n) betrieben wird und eine Erfassung eines Strommesssignals (IS) und/oder eines Spannungsmesssignals (US) der elektrischen Maschine (4, 13-1, 13-2, 13-n) und/oder eines Laststromkreises zur Versorgung der elektrischen Maschine (4,13-1,13-2,13-n) erfolgt, **dadurch gekennzeichnet, dass** auf Grundlage des Strommesssignals (IS) und/oder des Spannungsmesssignals (US) sowie zumindest einer Frequenz (f) des Strommesssignals (IS) und/oder des Spannungsmesssignals (US), welche in einem im Wesentlichen ganzzahligen Teilerverhältnis zu einer Kommutatorfrequenz der elektrischen Maschine (4, 13-1, 13-2, 13-n) steht, die Position und/oder Lageveränderung der Hydraulikpumpe bestimmt und zur Ansteuerung der elektrischen Maschine herangezogen wird.

2. Verfahren gemäß Anspruch 1, **dadurch gekennzeichnet, dass** aus dem Strommesssignal (IS) und/oder dem Spannungsmesssignal (US) zumindest eine im Wesentlichen ganzzahlige Subharmonische der Kommutatorfrequenz der elektrischen Maschine (4,13-1,13-2,13-n) gefiltert wird und deren Amplitude mit zumindest einem vorgegebenen Grenzwert verglichen wird.

3. Verfahren gemäß Anspruch 1 oder 2, **dadurch gekennzeichnet, dass** für das Strommesssignal (IS) und/oder das Spannungsmesssignal (US) eine Offsetkorrektur (29) auf einen Wert ungleich null erfolgt.

4. Verfahren gemäß einem der Ansprüche 1 bis 3, **dadurch gekennzeichnet, dass** eine Verstärkung eines Gleichanteils (43) und eine separate Verstärkung eines Wechselanteils (48) des Spannungssignals (US) und/oder des Stromsignals (IS) erfolgt, wobei zumindest ein Verstärkungsfaktor in der Weise gesteuert und/oder geregelt wird, dass störungsbedingte Rückwirkungen auf das Spannungssignal (US) und/oder das Stromsignal (IS) im Wesentlichen vermieden werden.

5. Verfahren gemäß einem der Ansprüche 1 bis 4, **dadurch gekennzeichnet, dass** das Strommesssignal (IS) und/oder das Spannungsmesssignal (US) mit berechneten Größen eines Beobachtermodells der elektrischen Maschine (4, 13-1, 13-2, 13-n) verglichen werden, wobei das Beobachtermodell Abbildungen des konstruktiven Aufbaus und nicht-reversibler Zustandsgrößen und reversibler Zustandsgrößen der elektrischen Maschine (4,13-1,13-2,13-n) umfasst.

6. Verfahren gemäß Anspruch 5, **dadurch gekennzeichnet, dass** die nicht-reversiblen Zustandsgrößen zumindest während des Funktionszeitraumes der elektrischen Maschine (4,13-1,13-2,13-n) wiederholt adaptiert werden.

7. Verfahren gemäß Anspruch 5 oder 6, **dadurch gekennzeichnet, dass** das Strommesssignal (IS) und/oder das Spannungsmesssignal (US) und/oder die nicht-reversiblen Zustandsgrößen und/oder die reversiblen Zustandsgrößen mit vorgegebenen Grenzwerten verglichen werden, wobei aus einem Erreichen oder Überschreiten eines jeweiligen Grenzwertes und/oder einer jeweiligen vorgegebenen Kombination von Grenzwerten ein spezifischer Fehler abgeleitet wird.

8. Kraftfahrzeugbremssystem mit einer Hydraulikpumpe, welches ausgestaltet ist zumindest eine dem Kraftfahrzeugbremssystem zugeordnete elektrische Maschine (4,13-1,13-2,13-n) pulsmoduliert zu betreiben und Mittel (2,3,7,8,9) zur Erfassung eines Strommesssignals (IS) und/oder eines Spannungsmesssignals (US) der elektrischen Maschine (4,13-1,13-2,13-n) und/oder eines Laststromkreises zur Versorgung der elektrischen Maschine (4,13-1,13-2,13-n) umfasst, **dadurch gekennzeichnet, dass** das Kraftfahrzeugbremssystem derart ausgestaltet ist, dass auf Grundlage des Strommesssignals (IS) und/oder des Spannungsmesssignals (US) sowie zumindest einer Frequenz (f) des Strommesssignals (IS) und/oder des Spannungsmesssignals (US), welche in einem im Wesentlichen ganzzahligen Teilerverhältnis zu einer Kommutatorfrequenz der elektrischen Maschine (4, 13-1, 13-2, 13-n) steht, die Position und/oder Lageveränderung der Hydraulikpumpe bestimmt und zur Ansteuerung der elektrischen Maschine herangezogen wird.

9. Kraftfahrzeugbremssystem gemäß Anspruch 8, **dadurch gekennzeichnet, dass** dieses ein Steuergerät umfasst, welches zum Betrieb der elektrischen Maschine (4,13-1,13-2,13-n) einer Hydraulikpumpe des Kraftfahrzeugbremssystems und/oder zum Betrieb der elektrischen Maschine (4,13-1,13-2,13-3) einer elektrischen Feststellbremse (13-1,13-2,13-3) ausgestaltet ist.

10. Kraftfahrzeugbremssystem gemäß Anspruch 9, **dadurch gekennzeichnet, dass** zum Betrieb der elektrischen Maschine (4,13-1,13-2,13-n) der Hydraulikpumpe (4) und zum Betrieb der elektrischen Maschine der elektrischen Feststellbremse (13-1,13-2,13-n) gemeinsam genutzten Hardware- und/oder Software-Ressourcen (2,3) eines integrierten Schaltkreis (ASIC) des Steuergeräts vorgesehen sind.

## Claims

1. Method for operating a hydraulic pump of a motor vehicle brake system, wherein the hydraulic pump is operated by means of an electric machine (4, 13-1, 13-2, 13-n) which is actuated in a pulse-modulated fashion, and a current measuring signal (IS) and/or a voltage measuring signal (US) of the electric machine (4, 13-1, 13-2, 13-n) and/or of a load circuit for supplying the electric machine (4, 13-1, 13-2, 13-n) is detected, **characterized in that** the position and/or change in position of the hydraulic pump are/is determined on the basis of the current measuring signal (IS) and/or of the voltage measuring signal (US) as well as of at least one frequency (f) of the current measuring signal (IS) and/or of the voltage measuring signal (US) which has an essentially integral division ratio with respect to a commutator frequency of the electric machine (4, 13-1, 13-2, 13-n) and/or is used to actuate the electric machine.

2. Method according to Claim 1, **characterized in that** at least one essentially integral subharmonic or commuter frequency of the electric machine (4, 13-1, 13-2, 13-n) is filtered from the current measuring signal (IS) and/or the voltage measuring signal (US), and the amplitude of said frequency is compared with at least one predefined limiting value.

3. Method according to Claim 1 or 2, **characterized in that** an offset correction (29) to a value unequal to zero is carried out for the current measuring signal (IS) and/or the voltage measuring signal (US) .

4. Method according to one of Claims 1 to 3, **characterized in that** amplification of a DC component (43) is carried out, and separate amplification of an AC component (48) is carried out, of the voltage signal (US) and/or of the current signal (IS), wherein open-loop and/or closed-loop control of at least one gain factor is carried out in such a way that fault-induced reactions to the voltage signal (US) and/or the current signal (IS) are essentially avoided.

5. Method according to one of Claims 1 to 4, **characterized in that** the current measuring signal (IS) and/or the voltage measuring signal (US) are compared with the calculated variables of an observer model of the electric machine (4, 13-1, 13-2, 13-n), wherein the observer model comprises representations of the structural design and non-reversible state variables and reversible state variables of the electric machine (4, 13-1, 13-2, 13-n).

6. Method according to Claim 5, **characterized in that** the non-reversible state variables are repeatedly adapted at least during the functional time period of the electric machine (4, 13-1, 13-2, 13-n).

7. Method according to Claim 5 or 6, **characterized in that** the current measuring signal (IS) and/or the voltage measuring signal (US) and/or the non-reversible state variables and/or the reversible state variables are compared with predefined limiting values, wherein a specific error is derived from a respective limiting value being reached or exceeded and/or from a respective predefined combination of limiting values.

8. Motor vehicle brake system having a hydraulic pump which is configured to operate in a pulse-modulated fashion at least one electric machine (4, 13-1, 13-2, 13-n) which is assigned to the motor vehicle brake system, and comprises means (2, 3, 7, 8, 9) for sensing a current measuring signal (IS) and/or a voltage measuring signal (US) of the electric machine (4, 13-1, 13-2, 13-n) and/or of a load circuit for supplying the electric machine (4, 13-1, 13-2, 13-n), **characterized in that** the motor vehicle brake system is configured in such a way that the position and/or change of the hydraulic pump are/is determined on the basis of the current measuring signal (IS) and/or the voltage measuring signal (US) as well as of at least one frequency (F) of the current measuring signal (IS) and/or of the voltage measuring signal (US) which has an essentially integral division ratio with respect to a commutator frequency of the electric machine (4, 13-1, 13-2, 13-n), and are/is used to actuate the electric machine.

9. Motor vehicle brake system according to Claim 8, **characterized in that** said system comprises a control unit which is configured to operate the electric machine (4, 13-1, 13-2, 13-n) of a hydraulic pump of the motor vehicle brake system and/or to operate the electric machine (4, 13-1, 13-2, 13-3) of an electric parking brake (13-1, 13-2, 13-3).

10. Motor vehicle brake system according to Claim 9, **characterized in that** commonly used hardware resources and/or software resources (2, 3) of an integrated circuit (ASIC) of the control unit are provided for operating the electric machine (4, 13-1, 13-2, 13-n) of the hydraulic pump (4) and for operating the electric machine of the electric parking brake (13-12, 13-2, 13-n).

## Revendications

1. Procédé pour faire fonctionner une pompe hydraulique d'un système de freinage de véhicule automobile, la pompe hydraulique fonctionnant au moyen d'une machine électrique (4, 13-1, 13-2, 13-n) commandée en modulation d'impulsions et une détection d'un signal de mesure de courant (IS) et/ou d'un signal de mesure de tension (US) de la machine électrique (4, 13-1, 13-2, 13-n) et/ou d'un circuit de courant de charge destiné à alimenter la machine électrique (4, 13-1, 13-2, 13-n) étant effectuée, **caractérisé en ce que** la position et/ou le changement de position de la pompe hydraulique sont déterminés sur la base du signal de mesure de courant (IS) et/ou du signal de mesure de tension (US) ainsi que d'au moins une fréquence (f) du signal de mesure de courant (IS) et/ou du signal de mesure de tension (US), laquelle se trouve dans un rapport de division sensiblement entier avec une fréquence de collecteur de la machine électrique (4, 13-1, 13-2, 13-n), et utilisés pour la commande de la machine électrique.

2. Procédé selon la revendication 1, **caractérisé en ce qu'**au moins une sous-harmonique sensiblement entière de la fréquence de collecteur de la machine électrique (4, 13-1, 13-2, 13-n) est filtrée hors du signal de mesure de courant (IS) et/ou du signal de mesure de tension (US) et son amplitude est comparée avec au moins une valeur limite prédéfinie.

3. Procédé selon la revendication 1 ou 2, **caractérisé en ce qu'**une correction de décalage (29) à une valeur différente de zéro est effectuée pour le signal de mesure de courant (IS) et/ou le signal de mesure de tension (US).

4. Procédé selon l'une des revendications 1 à 3, **caractérisé en ce qu'**une amplification d'une composante continue (43) et une amplification séparée d'une composante alternative (48) du signal de tension (US) et/ou du signal de courant (IS) sont effectuées, au moins un facteur d'amplification étant commandé et/ou régulé de manière à ce que les rétroactions liées au courant sur le signal de tension (US) et/ou le signal de courant (IS) soient sensiblement évitées.

5. Procédé selon l'une des revendications 1 à 4, **caractérisé en ce que** le signal de mesure de courant (IS) et/ou le signal de mesure de tension (US) sont comparés avec des grandeurs calculées d'un modèle d'observateur de la machine électrique (4, 13-1, 13-2, 13-n), le modèle d'observateur comportant des représentations de la structure constructive ainsi que des grandeurs d'état non réversibles et des grandeurs d'état réversibles de la machine électrique (4, 13-1, 13-2, 13-n).

6. Procédé selon la revendication 5, **caractérisé en ce que** les grandeurs d'état non réversibles sont adaptées de manière répétée au moins pendant la période de fonctionnement de la machine électrique (4, 13-1, 13-2, 13-n).

7. Procédé selon la revendication 5 ou 6, **caractérisé en ce que** le signal de mesure de courant (IS) et/ou le signal de mesure de tension (US) et/ou les grandeurs d'état non réversibles et/ou les grandeurs d'état réversibles sont comparés avec des valeurs limites prédéfinies, une erreur spécifique étant dérivée d'une atteinte ou d'un dépassement d'une valeur limite respective et/ou d'une combinaison prédéfinie respective de valeurs limites.

8. Système de freinage de véhicule automobile comprenant une pompe hydraulique, lequel est configuré pour faire fonctionner en modulation d'impulsions au moins une machine électrique (4, 13-1, 13-2, 13-n) associée au système de freinage de véhicule, et comporte des moyens (2, 3, 7, 8, 9) destinés à détecter un signal de mesure de courant (IS) et/ou un signal de mesure de tension (US) de la machine électrique (4, 13-1, 13-2, 13-n) et/ou d'un circuit de courant de charge destiné à alimenter la machine électrique (4, 13-1, 13-2, 13-n), **caractérisé en ce que** le système de freinage de véhicule est configuré de telle sorte que la position et/ou le changement de position de la pompe hydraulique sont déterminés sur la base du signal de mesure de courant (IS) et/ou du signal de mesure de tension (US) ainsi que d'au moins une fréquence (f) du signal de mesure de courant (IS) et/ou du signal de mesure de tension (US), laquelle se trouve dans un rapport de division sensiblement entier avec une fréquence de collecteur de la machine électrique (4, 13-1, 13-2, 13-n), et utilisés pour la commande de la machine électrique.

9. Système de freinage de véhicule automobile selon la revendication 8, **caractérisé en ce que** celui-ci comporte un contrôleur qui est configuré pour faire fonctionner la machine électrique (4, 13-1, 13-2, 13-n) d'une pompe hydraulique du système de freinage de véhicule automobile et/ou pour faire fonctionner la machine électrique (4, 13-1, 13-2, 13-3) d'un frein de stationnement électrique (13-1, 13-2, 13-3).

10. Système de freinage de véhicule automobile selon la revendication 9, **caractérisé en ce que** des ressources matérielles et/ou logicielles (2, 3) utilisées en commun d'un circuit intégré (ASIC) du contrôleur sont présentes pour faire fonctionner la machine électrique (4, 13-1, 13-2, 13-n) de la pompe hydraulique (4) et pour faire fonctionner la machine électrique du frein de stationnement électrique (13-1, 13-2, 13-n).
